# EUROPÄISCHE PATENTANMELDUNG

(11) **EP 1 661 640 A1**
(43) Veröffentlichungstag der Anmeldung: **31.05.2006**
(21) Anmeldenummer: 04027895.4
(22) Anmeldetag: 24.11.2004
(51) Int. Cl.: B22C 7/02, B22C 9/04, B22C 9/10

(54) **Verfahren zum Herstellen eines verlorenen Modells und darin eingebrachten Kern**

(71) Anmelder: SIEMENS AKTIENGESELLSCHAFT, 80333 München (DE)
(72) Erfinder: Paul, Uwe, Dr., 40882 Ratingen (DE); Pickert, Ursula, 45470 Muelheim a.d. Ruhr (DE)

(57) **Zusammenfassung**

Im erfindungsgemäßen Verfahren zum Herstellen eines Modells für die feingusstechnische Darstellung einer wenigstens einen Hohlraum aufweisenden Turbinenkomponente umfasst das fertige Modell zumindest einen Kern und ein den Kern mindestens teilweise umgebendes, die Außenkontur des Turbinenbauteils zumindest teilweise definierendes Außenkonturmodell (1). Das Herstellen des Kerns erfolgt aus einem aushärtbaren Kernmaterial (11), welches im Verlauf des Verfahrnes aushärtet, und das Herstellen des Außenkonturmodells (1) aus einem ausbrennbaren oder ausschmelzbaren Material. Dabei wird zuerst das Außenkonturmodell (1) mit zumindest einem dem wenigstens einen Hohlraum der Turbinenkomponente entsprechenden Hohlraum (8a-8e) hergestellt und anschließend zum Herstellen des wenigstens einen Kerns das aushärtbare Kernmaterial (11) in den wenigstens einen Hohlraum (8a-8e) eingefüllt und ausgehärtet.

## Beschreibung

Die vorliegende Erfindung betrifft ein Verfahren zum Herstellen eines Modells für die feingusstechnische Darstellung einer einen Hohlraum aufweisenden Komponente sowie ein Verfahren zum Herstellen einer Giesform für eine wenigstens einen Hohlraum aufweisenden Komponente, in dem ein Modell für die feingusstechnische Darstellung der Komponente zur Anwendung kommt

Von besonderer Bedeutung beim Herstellen von hohlgegossenen Komponenten wie z.B. Turbinenkomponenten ist das Erzeugen des Hohlraums. Beispielsweise weisen Turbinenschaufeln für Gasturbinen ein Schaufelblatt auf, das eine Anströmkante und eine Abströmkante besitzt. Anström- und Abströmkante sind über eine saugseitige und eine druckseitige Wand miteinander verbunden. Zwischen der saugseitigen und der druckseitigen Wand ist wenigstens ein Hohlraum angeordnet, der sich durch einen Großteil des Schaufelblattes erstreckt und zum Zuführen eines Kühlfluids, beispielsweise Luft oder Dampf, mit welchem das Schaufelblatt beim Betrieb der Turbine gekühlt wird, dient. Die Kühlwirkung hängt dabei von der Gestaltung des Hohlraumes und seiner genauen Positionierung innerhalb des Schaufelblattes ab. Vergleichsweise geringe Abweichungen in der Positionierung des Hohlraums können zu einer erheblichen Abweichung in der Kühlwirkung führen.

Die Form und die Position des Hohlraums innerhalb des Schaufelblattes stellt daher eine Herausforderung für die Konstruktion von Turbinenschaufeln dar. Nicht selten sind zum Optimieren der Lage und der Form des Hohlraums im Verhältnis zur Außenkontur der Turbinenschaufel eine Reihe von Designänderungen nötig, bis das endgültige Design feststeht.

Im Entwicklungsprozess werden Turbinenschaufeln mit unterschiedlichen Designs hergestellt und getestet, bevor das endgültige Design feststeht.

Das Herstellen beispielsweise von hohlgegossenen Turbinenschaufeln für Gasturbinen erfolgt mittels einer keramischen Feingusstechnik. In dieser wird ein Kern zum Definieren des Hohlraums aus einem keramischen Material gespritzt oder gegossen. Anschließend wird dieser Kern in eine Form zum Spritzen oder Gießen eines Wachsmodells eingesetzt und das Wachs in die Form eingespritzt oder eingegossen. Nach dem Abkühlen des Wachses bildet das fertige Wachsmodell zusammen mit dem Keramikkern ein Modell für die feingusstechnische Darstellung der Turbinenschaufel, welches im weiteren Verlauf des Verfahrens zum Herstellen einer Keramikform für das Gießen der Turbinenschaufel Verwendung findet. Zum Herstellen der Keramikform wird eine Keramikhülle um das Wachsmodell herum angebracht. Nachdem die Keramikhülle ausgehärtet ist, wird das Wachs des Wachsmodells ausgeschmolzen, sodass eine Form zum Gießen der hohlen Turbinenschaufel übrig bleibt. Diese Form umfasst einerseits die Keramikhülle und andererseits den Keramikkern. Ein derartiges Verfahren ist beispielsweise in US 5,465,780 offenbart.

Da trotz numerischer Hilfsmittel zur Simulation von Strömungs- und Kühlungseigenschaften Korrekturen des Kerndesigns im Endstadium der Produktentwicklung mittels Tests vorgenommen werden müssen, ist das beschriebene Verfahren bei der Produktentwicklung relativ aufwendig, da für jedes Design neue Gieß- bzw. Spritzformen für den Kern und das Wachsmodell hergestellt werden müssen.

In DE 101 29 975 A1 wurde daher vorgeschlagen, die Gieß- bzw. Spritzformen zum Gießen des Kerns mit auswechselbaren Einsätzen auszustatten, um so das Kerndesign ändern zu können, ohne dass eine komplett neue Gieß- bzw. Spritzformen für den Kern hergestellt werden muss. Aber auch diese Vorgehensweise ermöglicht lediglich lokale Korrekturen, nicht jedoch eine globale Korrektur des Kerndesigns. Zudem sind in dem in DE 101 29 975 A1 beschriebenen Verfahren Korrekturen am Design der Außenkontur der Turbinenschaufel nicht möglich, ohne dafür neue Werkzeuge wie etwa neue Gießformen herzustellen.

Das Herstellen von Werkzeugen für die Fertigung der keramischen Kerne sowie der Wachsmodelle ist nach wie vor aufwendig und kostenintensiv. Beispielsweise entfallen während der Produktionsprozessentwicklung für hohlgegossene Turbinenschaufeln große Teile der Entwicklungszeit und der Entwicklungskosten auf das Herstellen der Werkzeuge. Zudem können die Werkzeuge für die Serienproduktion erst freigegeben werden, nachdem das Design des hohlgegossenen Turbinenbauteils freigegeben ist. Ansonsten könnten Änderungen am Design zu erheblichen Zeitverzug und hohen Kosten führen.

Aufgabe der vorliegenden Erfindung ist es daher, ein verbessertes Verfahren zum Herstellen eines Modells für die feingusstechnische Darstellung einer wenigstens einen Hohlraum aufweisenden Turbinenkomponente sowie ein verbessertes Verfahren zum Herstellen einer Gießform für eine wenigstens einen Hohlraum aufweisende Turbinenkomponente zur Verfügung zu stellen.

Diese Aufgabe wird durch ein Verfahren zum Herstellen eines Modells für die feingusstechnische Darstellung einer wenigstens einen Hohlraum aufweisenden Komponente gemäß Anspruch 1 bzw. durch ein Verfahren zum Herstellen einer Gießform oder einer Spritzform für einen wenigstens einen Hohlraum aufweisenden Komponente gemäß Anspruch 10 gelöst.

Im erfindungsgemäßen Verfahren zum Herstellen eines Modells für die feingusstechnische Darstellung einer wenigstens einen Hohlraum aufweisenden Komponente umfasst das fertige Modell zumindest einen Kern und ein den Kern mindestens teilweise umgebendes und die Außenkontur des Bauteils zumindest teilweise definierendes Außenkonturmodell. Das Herstellen des Kerns erfolgt aus einem aushärtbaren Kernmaterial, welches im Verlauf des Verfahrens ausgehärtet wird. Das Herstellen des Außenkonturmodells erfolgt aus einem ausbrennbaren oder ausschmelzbaren Material. Im erfindungsgemäßen Verfahren wird zuerst das Außenkonturmodell mit zumindest einem dem wenigstens einen Hohlraum der Komponente entsprechenden Hohlraum hergestellt. Anschließend wird zum Herstellen des wenigstens einen Kerns das aushärtbare Material in den wenigstens einen Hohlraum eingefüllt und ausgehärtet.

Im erfindungsgemäßen Verfahren dient daher das Außenkonturmodell gleichzeitig als Gieß- oder Spritzform für den Kern, sodass keine eigene Gieß- bzw. Spritzform für den Kern vorhanden zu sein braucht. Damit kann für die Prozessentwicklung bis hin zur Prototypherstellung auf die teure Herstellung einer eigenen Gieß- bzw. Spritzform für den Kern verzichtet werden.

Als Außenkonturmodell kann ein Harzmodell Verwendung finden. Zum Herstellen des Harzmodells kann ein Rapid-Prototype-Verfahren, insbesondere ein Stereo-Lithographie-Prozess, zur Anwendung kommen. In einem Stereo-Lithographie-Prozess findet ein Harz Verwendung, das bei Bestrahlung mit einem Laser aushärtet. Zum Herstellen des Außenkonturmodells wird das zuvor fließfähige Harz mittels des Lasers Schicht für Schicht ausgehärtet, bis das Außenkonturmodell in seiner gewünschten Kontur fertig gestellt ist. Das Laseraushärten kann dabei insbesondere computergesteuert erfolgen, sodass sich bereits im Computer simulierte Designs relativ rasch in ein Modell für die feingusstechnische Darstellung der Komponente umsetzen lassen.

Beim Einfüllen und/oder Aushärten des aushärtbaren Materials kann das Außenkonturmodell von einer stabilisierenden Ummantelung, einem so genannten Setter, umgeben sein. Auch die stabilisierende Ummantelung kann mittels eines Rapid-Prototype-Verfahrens hergestellt werden, etwa indem sie mittels eines Stereo-Lithographie-Prozesses aus Harz hergestellt werden. Insbesondere ist es vorteilhaft, wenn die Ummantelung ein mechanisch stabilisierendes Material, beispielsweise ein Metallpulver, enthält. Schließlich ist es auch möglich, die Ummantelung vollständig aus Metallpulver herzustellen, wobei geeignete Rapid-Prototype-Verfahren, bspw. Rapid Lasersintering, zum Verfestigen des Metallpulvers zur Anwendung kommen können.

Die stabilisierende Ummantelung hält das Außenkonturmodell beim Einfüllen des aushärtbaren Materials in Form, sodass durch den beim Einfüllen entstehenden Druck auf das Außenkonturmodell keine Designabweichungen des Kerns verursacht werden.

Als Kernmaterial eignet sich insbesondere ein vor dem Aushärten fließfähiges Material, welches in den wenigstens einen Hohlraum des Außenkonturmodells eingegossen oder eingespritzt wird. Wegen ihrer hohen Temperaturbeständigkeit kommen als Kernmaterial insbesondere Materialien auf Keramikbasis in Frage.

Das erfindungsgemäße Verfahren zum Herstellen eines Modells für die feingusstechnische Herstellung einer wenigstens einen Hohlraum aufweisenden Komponente ist im Vergleich zu den Verfahren im Stand der Technik, in denen für die Prozessentwicklung und die Qualifizierung von Turbinenkomponente Produktionswerkzeuge, insbesondere Gieß- oder Spritzformen, hergestellt werden müssen, variabler und billiger.

Insbesondere wenn Rapid-Prototype-Verfahren wie Stereo-Lithographie-Prozesse oder Rapid-Laser-Sinterprozesse zum Herstellen des Außenkonturmodells und/oder der stabilisierenden Ummantelung Verwendung finden, führt das erfindungsgemäße Verfahren auch schneller zu einem Modell für die feingusstechnische Darstellung der Komponente als die Verfahren nach Stand der Technik.

Für die Prozessentwicklung bis hin zur Prototypherstellung kann bei dem erfindungsgemäßen Verfahren auf die teueren eigentlichen Produktionswerkzeuge verzichtet werden, was den Startpunkt der Prozessentwicklung zu einem wesentlich früheren Zeitpunkt ermöglicht, die Entwicklungszeit erheblich verkürzt und das Risiko von Korrekturen an Produktionswerkzeugen aufgrund von Designänderungen stark reduziert. Dementsprechend können die Gesamtwerkzeugkosten verringert werden.

Schließlich ermöglicht das erfindungsgemäße Verfahren eine wesentlich frühere Markteinführung neuer Designs sowie eine schnellere Reaktion auf servicebedingte Designänderungen.

In einem erfindungsgemäßen Verfahren zum Herstellen einer Gießform oder einer Spritzform für eine wenigstens einen Hohlraum aufweisende Komponente findet das erfindungsgemäße Verfahren zum Herstellen eines Modells für die feingusstechnische Darstellung der Komponente Anwendung.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
Figur 1 zeigt die schematische Darstellung eines Außenkonturmodells zur Verwendung im erfindungsgemäßen Verfahren in einer geschnittenen perspektivischen Ansicht.
Figur 2 zeigt das Außenkonturmodell aus Fig. 1 während des Einfüllens eines aushärtbaren Materials in Öffnungen des Außenkonturmodells.
Figur 3 zeigt beispielhaft eine Gasturbine in einem Längsteilschnitt.
Figur 4 zeigt in einer perspektivischen Ansicht eine Laufschaufel oder Leitschaufel einer Strömungsmaschine.
Figur 5 zeigt eine Brennkammer einer Gasturbine.

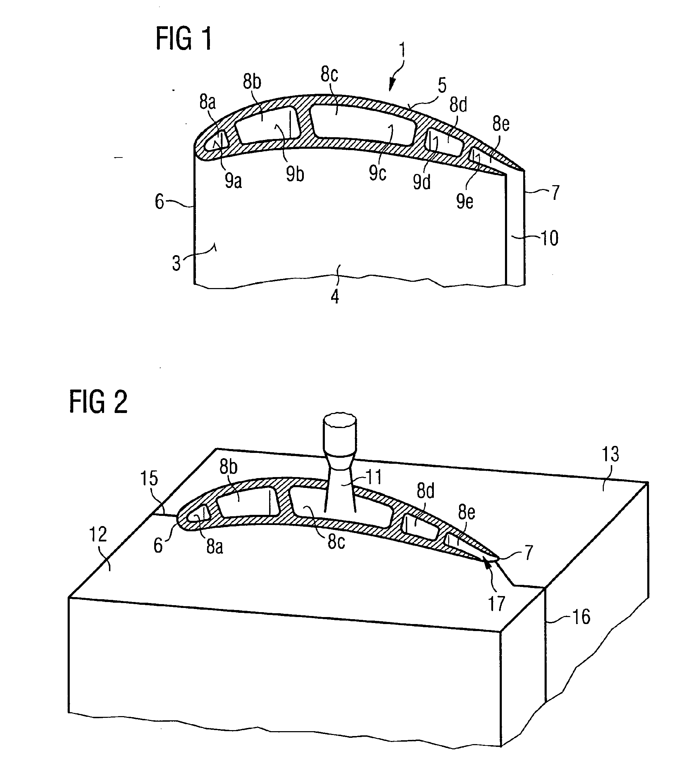

Figur 1 zeigt in einer etwas vereinfachten Darstellung ein Modell 1 einer Turbinenschaufel als exemplarisches Beispiel für eine Komponente mit einem Hohlraum in einer perspektivischen, geschnittenen Ansicht. Das Modell 1 weist eine Außenfläche 3 auf, welche die Außenkontur einer Turbinenschaufel wiedergibt. Die Außenkontur gliedert sich in eine druckseitige Kontur 4 und eine saugseitige Kontur 5. Die Kanten, an denen die druckseitige Kontur 4 und die saugseitige Kontur 5 ineinander übergehen, bilden bei der späteren Turbinenschaufel die Anströmkante (Kante 6) bzw. die Abströmkante (Kante 7).

Das Modell 1 ist nicht massiv, sondern es weist Hohlräume, im vorliegenden Ausführungsbeispiel fünf Hohlräume 8a bis 8e, auf, welche die späteren Kühlluftkanäle der Turbinenschaufel repräsentieren. Die die Hohlräume 8a bis 8e begrenzenden Innenflächen 9a bis 9e des Modells 1 repräsentieren dementsprechend die Innenkontur der späteren Turbinenschaufel. Der fünfte Hohlraum 8e weist dabei im Bereich der Kante 7 eine sich parallel zur Kante erstreckende Öffnung 10 auf, welche eine Austrittsöffnung zum Austritt von Kühlfluid in der späteren Turbinenschaufel repräsentiert.

Wie oben erläutert, repräsentiert das Modell 1 bereits sowohl die Außenkontur als auch die Innenkontur der späteren Turbinenschaufel. Das Modell ist aus Kunstharz hergestellt, der unter Temperatureinwirkung schmilzt oder verbrennt und kommt beim Herstellen eines Modells für die feingusstechnische Darstellung der herzustellenden Turbinenschaufel zur Anwendung.

Das oben beschriebene Kunstharzmodell stellt im Modell für die feingusstechnische Darstellung der Turbinenschaufel lediglich ein Modell für die Außenkontur der Turbinenschaufel dar und wird daher nachfolgend als Außenkonturmodell 1 bezeichnet. Die Darstellung der Innenkontur der Hohlräume der Turbinenschaufel erfolgt dagegen anhand eines so genannten Kerns, dessen Außenflächen die Innenkontur der Hohlräume der Turbinenschaufel repräsentieren. Das Außenkonturmodell 1 und die noch zu beschreibenden Kerne bilden gemeinsam das Modell für die feingusstechnische Darstellung der Turbinenschaufel.

Das Herstellen des Außenkonturmodells 1 erfolgt im Ausführungsbeispiel mittels eines Stereo-Lithographie-Prozesses. In diesem Prozess wird ein in einem Behälter befindliches fotoreaktives flüssiges Harz lokal mit Laserstrahlung einer geeigneten Wellenlänge bestrahlt. Die Bestrahlung führt an der bestrahlten Stelle zu einem Aushärten des Harzes. Durch eine geeignete Führung des Laserstrahls kann die Aushärtung des Harzes so gesteuert werden, dass sich beliebig geformte Strukturen aus ausgehärtetem Kunstharz realisieren lassen. Stereo-Lithographie-Verfahren sind aus dem Stand der Technik bekannt und sollen daher an dieser Stelle keine weitere Erläuterung finden.

Mittels des Stereo-Lithographie-Prozesses wird das Außenkonturmodell 1 aus einem flüssigen Kunstharz durch gezieltes lokales Aushärten hergestellt. Die Steuerung des Lasers erfolgt dabei mittels eines Computers, sodass die Herstellung des Außenkonturmodells 1 auf der Basis eines reinen Computermodells erfolgen kann.

Nach dem Herstellen des Außenkonturmodells 1 erfolgt das Herstellen der die Hohlräume der späteren Turbinenschaufel definierenden Kerne. Dazu wird ein fließfähiges keramisches Material, die so genannte Kernmasse 11, in die Hohlräume 8a bis 8e des Außenkonturmodells 1 eingefüllt. Das Einfüllen kann, wie in Figur 2 dargestellt, beispielsweise durch ein Eingießen realisiert werden. Andere Einfüllverfahren sind jedoch auch möglich. Beispielsweise kann die Kernmasse 11 in die Hohlräume auch eingestrichen oder eingespritzt werden.

Um eine Verformung des Außenkonturmodells 1 während des Einfüllens der Kernmasse 11 aufgrund des dabei entstehenden Drucks zu verhindern, wird das Außenkonturmodell 1 vor dem Einfüllen der keramischen Kernmasse 11 mit einer stabilisierenden Ummantelung 12, 13 umgeben. Diese stabilisierende Ummantelung 12, 13 ist zweiteilig ausgebildet. Ein Teil 12 der stabilisierenden Ummantelung weist eine zur druckseitigen Kontur 4 des Außenkonturmodells 1 inverse Fläche auf, während der andere Teil 13 des Außenkonturmodells 1 eine zur saugseitigen Kontur 5 des Außenkonturmodells 1 inverse Fläche aufweist. Die zur Außenkontur 4, 5 inversen Flächen der stabilisierenden Ummantelung werden von Stoßflächen eingerahmt, an denen die beiden Teile 12, 13 aneinander stoßen, wenn sie das Außenkonturmodell 1 stabilisierend umgeben. Entsprechend befinden sich die Stoßflächen dann im Bereich 15, 16 der Kanten 6, 7 des Außenkonturmodells 1.

Im Bereich 16 der Kante 7 des Außenkonturmodells 1 befindet sich beispielsweise zudem eine Aufweitung 17 der Stoßflächen, sodass diese in unmittelbarer Nähe zur Kante 7 nicht aneinander stoßen. Der aufgeweitete Bereich 17 bildet zusammen mit dem Hohlraum 8e die Form für denjenigen Kern, welcher später die Innenkontur des entsprechenden Hohlraums der Turbinenschaufel definiert.

Das Herstellen der stabilisierenden Ummantelung 12, 13 erfolgt im vorliegenden Ausführungsbeispiel wie die Herstellung des Außenkonturmodells 1 mittels eines Stereo-Lithographie-Verfahrens. Es ist von Vorteil, wenn die im Stereo-Lithographie-Verfahren zur Aushärtung gebrachte Harz- bzw. Kunstharzmasse eine stabilisierende Komponente, beispielsweise ein Metallpulver, enthält. Eine einmal hergestellte stabilisierende Ummantelung 12, 13 kann wiederverwendet werden, solange keine Designänderungen an der Außenkontur der Turbinenschaufel vorgenommen werden. Die stabilisierende Ummantelung kann in einer Abänderung der beschriebenen Ausführungsvariante auch vollständig aus Metall bestehen kann. Sie kann in diesem Fall bspw. mittels Rapid Lasersintern aus Metallpulver hergestellt werden.

Nachdem alle Hohlräume 8a bis 8e des Außenkonturmodells 1 mit der keramischen Kernmasse 11 gefüllt sind, erfolgt ein Aushärten der Masse. Nachdem die Masse ausgehärtet ist, wird die stabilisierende Ummantelung 12, 13 entfernt, sodass das Außenkonturmodell 1 mit in seinen Hohlräumen befindlichen Keramikkernen zurückbleibt. Das Außenkonturmodell 1 bildet dann zusammen mit den Keramikkernen ein Modell für die feingusstechnische Darstellung der Turbinenschaufel.

Das so hergestellte Modell für die feingusstechnische Darstellung der Turbinenschaufel kann anschließend für das Herstellen einer Gießform für die Turbinenschaufel Verwendung finden. Dazu wird das Modell mit einer keramischen Masse umgeben, die anschließend ausgehärtet wird. Dabei verbindet sich die Keramikmasse an ausgewählten Stellen mit den im Außenkonturmodell 1 befindlichen Keramikkernen. Nachdem die das Außenkonturmodell 1 umgebende Keramikmasse vollständig ausgehärtet ist, erfolgt ein Ausschmelzen oder Ausbrennen des das Außenkonturmodell 1 bildenden Harzes. Zurück bleibt eine Gießform für das Gießen der Turbinenschaufel. Aufgrund der Zerstörung des Außenkonturmodells 1 beim Ausbrennen bzw. Ausschmelzen wird das Außenkonturmodell 1 auch verlorenes Modell genannt. In der Gießform definieren die Außenkonturen der Keramikkerne die Innenkonturen der späteren Turbinenschaufel und die Innenkontur der Keramikform die spätere Außenkontur der Turbinenschaufel.

Aufgrund der direkten Umsetzung eines Computermodells in ein Außenkonturmodell 1, welches gleichzeitig als Form für die Keramikkerne dient, kann auf die aufwendige und kostenintensive Herstellung von Werkzeugen wie etwa Gießformen für die Fertigung der keramischen Kerne sowie der Wachsmodelle verzichtet werden. Es ist so eine sehr viel raschere Umsetzung eines Computermodells in ein für die feingusstechnische Darstellung der Turbinenschaufel geeignetes Modell möglich. Dadurch lässt sich Aufwand für die Herstellung einer Gießform für eine Turbinenschaufel sowie die dazu benötige Zeit verringern.

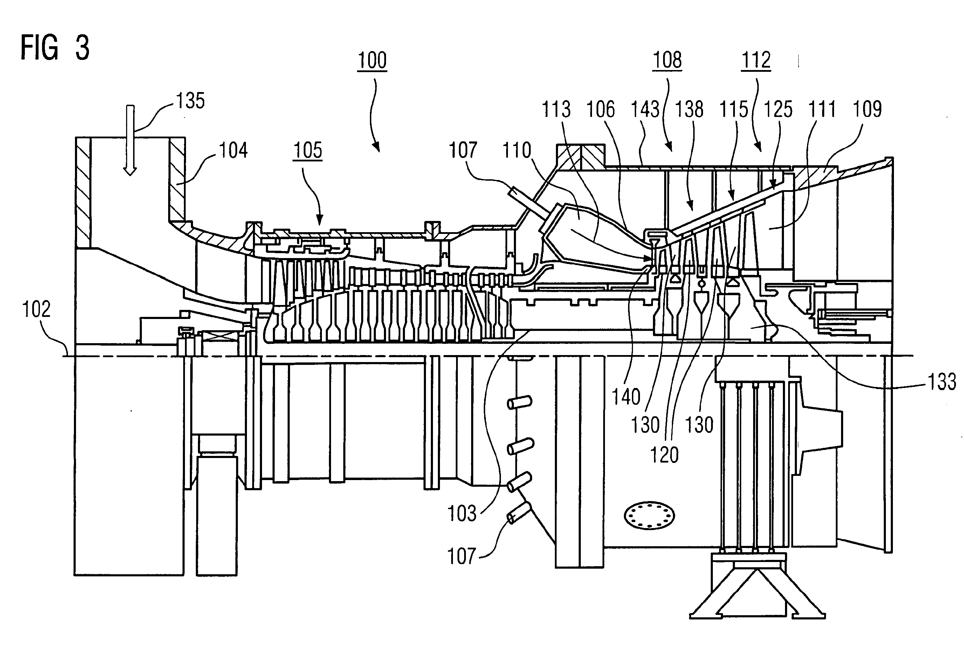

Zum besseren Verständnis der Erfindung folgt eine Beschreibung einer typischen Gasturbine, einer typischen Turbinenschaufel und einer typischen Brennkammer anhand der Figuren 3 bis 5.

Die Figur 3 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1204776 B1, EP 1306454, EP 1319729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

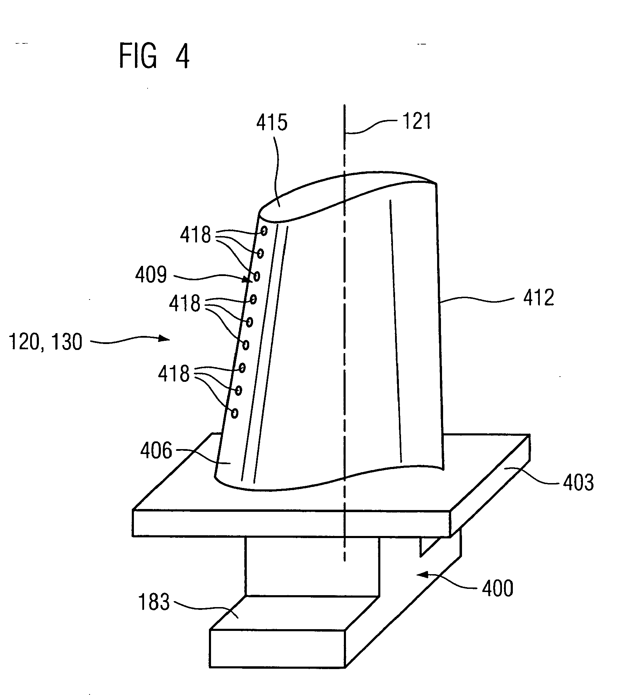

Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1204776 B1, EP 1306454, EP 1319729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP1 306 454 A1, die Teil dieser Offenbarung sein sollen.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

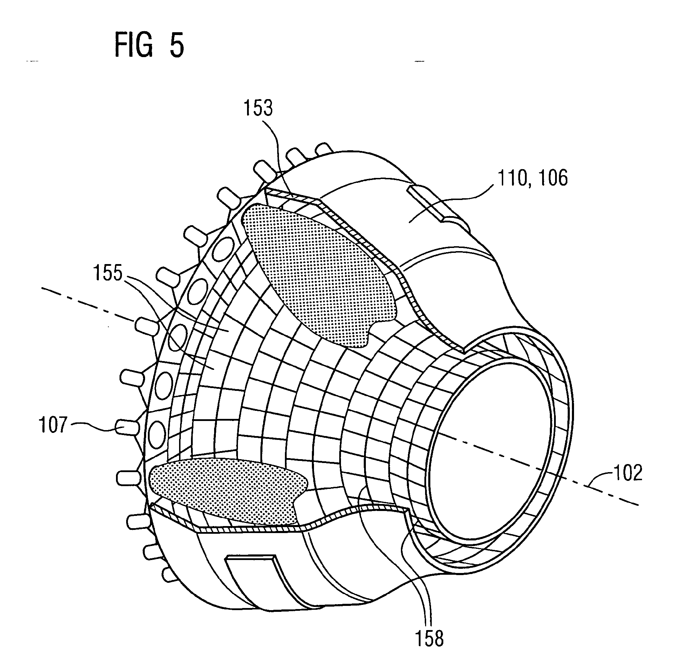

Die Figur 5 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein. Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

## Patentansprüche

1. Verfahren zum Herstellen eines Modells für die feingusstechnische Darstellung einer wenigstens einen Hohlraum aufweisenden Komponente,
insbesondere einer Turbinenkomponente
bei dem
- das fertige Modell zumindest einen Kern und ein den Kern mindestens teilweise umgebendes, die Außenkontur des Turbinenbauteils zumindest teilweise definierendes Außenkonturmodell (1) umfasst,
- ein Herstellen des Kerns aus einem aushärtbaren Kernmaterial (11),
welches im Verlauf des Verfahrnes aushärtet, erfolgt und
- ein Herstellen des Außenkonturmodells (1) aus einem ausbrennbaren oder ausschmelzbaren Material erfolgt,
**dadurch gekennzeichnet, dass**
zuerst das Außenkonturmodell (1) mit zumindest einem dem wenigstens einen Hohlraum der Komponente entsprechenden
Hohlraum (8a-8e) hergestellt wird und anschließend zum Herstellen des wenigstens einen Kerns das aushärtbare Kernmaterial (11) in den wenigstens einen Hohlraum (8a-8e) eingefüllt und ausgehärtet wird.

2. Verfahren nach Anspruch 1,
**dadurch gekennzeichnet, dass**
als Außenkonturmodell (1) ein Harzmodell Verwendung findet.

3. Verfahren nach Anspruch 2,
**dadurch gekennzeichnet, dass**
das Herstellen des Harzmodells mittels eines Rapid-Prototype-Verfahrens erfolgt.

4. Verfahren nach einem der vorangehenden Ansprüche,
**dadurch gekennzeichnet, dass**
das Außenkonturmodell (1) beim Einfüllen und/oder Aushärten des aushärtbaren Kernmaterials (11) von einer stabilisierenden Ummantelung (12, 13) umgeben ist.

5. Verfahren nach Anspruch 4,
**dadurch gekennzeichnet, dass**
die stabilisierende Ummantelung (12, 13) mittels eines Rapid-Prototype-Verfahrens hergestellt wird

6. Verfahren nach Anspruch 5,
**dadurch gekennzeichnet, dass**
die stabilisierende Ummantelung (12, 13) mittels eines Stereo-Lithographie-Prozesses aus Harz hergestellt wird.

7. Verfahren nach Anspruch 6,
**dadurch gekennzeichnet, dass**
das zum Herstellen der Ummantelung (12, 13) verwendete Harz ein mechanisch stabilisierendes Material enthält.

8. Verfahren nach Anspruch 7,
**dadurch gekennzeichnet, dass**
als mechanisch stabilisierendes Material ein Metallpulver Verwendung findet.

9. Verfahren nach Anspruch 5,
**dadurch gekennzeichnet, dass**
die stabilisierende Ummantelung (12, 13) mittels Rapid Lasersintering aus Metallpulver hergestellt wird.

10. Verfahren nach einem der vorangehenden Ansprüche,
**dadurch gekennzeichnet, dass**
als Kernmaterial (11) ein vor dem Aushärten fließfähiges Material Verwendung findet,
welches in den wenigstens einen Hohlraum (8a-8e) des Außenkonturmodells (1) eingegossen, eingestrichen oder eingespritzt wird.

11. Verfahren nach einem der vorangehenden Ansprüche,
**dadurch gekennzeichnet, dass**
als Kernmaterial (11) ein Material auf Keramikbasis zur Anwendung kommt.

12. Verfahren zum Herstellen einer Gießform für eine wenigstens einen Hohlraum aufweisende Komponente, insbesondere einer Turbinenkomponente
bei dem ein nach einem Verfahren gemäß einem der Ansprüche 1 bis 11 hergestelltes Modell Verwendung findet.
